# EUROPÄISCHE PATENTSCHRIFT

(11) **EP 3 388 973 B1**
(45) Veröffentlichungstag und Bekanntmachung des Hinweises auf die Patenterteilung: **14.05.2025**
(21) Anmeldenummer: 18163571.5
(22) Anmeldetag: 23.03.2018
(51) Int. Cl.: G06V 20/56, B60R 16/023, B60W 40/06, B60T 8/172

(54) **VERFAHREN UND VORRICHTUNG ZUR ERMITTLUNG EINES FAHRBAHNZUSTANDS**
METHOD AND DEVICE FOR DETERMINING A VEHICLE CONDITION
PROCÉDÉ ET DISPOSITIF DE DÉTERMINATION D'UN ÉTAT DE LA CHAUSSÉE

(30) Priorität: 11.04.2017 DE 102017206244
(43) Veröffentlichungstag der Anmeldung: 17.10.2018
(73) Patentinhaber: Continental Autonomous Mobility Germany GmbH, 85057 Ingolstadt (DE)
(72) Erfinder: Hartmann, Bernd, 61350 Bad Homburg (DE)
(74) Vertreter: Continental Corporation

(56) Entgegenhaltungen:
- EP-A1- 2 573 594
- WO-A1-2015/070861
- WO-A1-2016/177372
- WO-A1-2017/005689
- WO-A1-2017/167583
- DE-A1- 102007 060 858
- DE-A1- 102013 213 106
- DE-A1- 102016 009 928
- JP-A- 2007 322 231
- KR-B1- 101 394 244
- US-A- 5 765 119
- US-A1- 2018 060 674
- SCHEDL ALOIS ET AL: "Innovation & Nachhaltigkeit im Betonstraßenbau - Publikation anlässlich der Festveranstaltung zum 75. Geburtstag von BR h. c. Prof. DI Dr. techn. Hermann Sommer", 1 February 2011 (2011-02-01), Vienna, Austria, pages 1 - 16, XP055850140, Retrieved from the Internet <URL:https://www.zement.at/downloads/betonstrassenbau_2011.pdf> [retrieved on 20211011]

## Beschreibung

Die vorliegende Erfindung betrifft ein Verfahren und eine Vorrichtung zur Ermittlung eines Fahrbahnzustands. Insbesondere betrifft die vorliegende Erfindung das Erkennen einer Fahrbahn mit Aquaplaninggefahr. Ferner betrifft die vorliegende Erfindung ein Kraftfahrzeug mit einer Vorrichtung zur Ermittlung eines Fahrbahnzustands.

### Stand der Technik

Aquaplaning bezeichnet das Aufschwimmen eines Reifens auf einem Wasserfilm einer nassen Fahrbahn. Dabei schiebt sich ein Wasserkeil unter die Reifenaufstandsfläche und führt damit zum Verlust der Haftung. Im Moment des Aquaplanings können keine Führungs- und Bremskräfte auf die Fahrbahn übertragen werden. Das Auftreten von Aquaplaning stellt eine erhebliche Gefahr für den Fahrbetrieb eines Kraftfahrzeugs dar. Eine besondere Gefährdung ergibt sich dadurch, dass in vielen Fällen Aquaplaning ohne wesentliche, vom Fahrer erkennbare Vorwarnung auftritt und somit der Fahrer von dieser Gefahr überrascht wird. Dabei verliert der Reifen während des Aquaplanings vollständig den Kontakt zur Fahrbahn, und das Fahrzeug schwimmt quasi auf dem Wasser. In diesem Zustand ist das Fahrzeug weder lenk- noch bremsbar. Da Aquaplaning in Abhängigkeit einer verdrängten Wassermenge je Zeiteinheit nur oberhalb einer kritischen Fahrgeschwindigkeit auftritt, sind Unfälle aufgrund der hohen Fahrgeschwindigkeit oft besonders schwerwiegend.

Aus der WO 2015/070861 A1 ist ein Verfahren zur Bestimmung einer Fahrbahnauflage mittels eines Fahrzeugkamerasystems bekannt, bei dem mindestens ein Bild einer Fahrzeugumgebung mittels des Fahrzeugsystems aufgenommen wird, das mindestens eine Bild ausgewertet wird, um Indizien für das Vorhandensein einer Fahrbahnauflage beim Überfahren der Fahrbahn durch ein Fahrzeug zu ermitteln, die ermittelten Indizien bei der Bestimmung einer Fahrbahnauflage berücksichtigt werden und das Ergebnis der Bestimmung der Fahrbahnauflage ausgegeben werden kann.

Die WO 2017/005689 A1 beschreibt ein Verfahren zum Bestimmen zumindest einer reifenspezifischen Kenngröße eines Reifens eines Kraftfahrzeugs, bei welchem mittels zumindest einer fahrzeugseitigen Kamera ein Bereich des Reifens des Kraftfahrzeugs erfasst wird, wobei mittels der zumindest einen Kamera eine Reifenflanke des Reifens mit einer Reifenbeschriftung als der Bereich erfasst wird, und mittels einer Auswerteeinrichtung die Reifenbeschriftung identifiziert und anhand der Reifenbeschriftung die zumindest eine reifenspezifische Kenngröße bestimmt wird.

Es ist daher erstrebenswert, die Gefahr für Aquaplaning möglichst frühzeitig zu erkennen, so dass die Fahrweise eines Kraftfahrzeugs durch den Fahrer oder ein in dem Fahrzeug vorhandenes Assistenzsystems entsprechend angepasst werden kann. Es besteht daher ein Bedarf, für eine Ermittlung des Fahrbahnzustandes. Insbesondere besteht ein Bedarf zur Ermittlung eines Fahrbahnzustandes, welcher die Gefahr für Aquaplaning umfasst.

### Offenbarung der Erfindung

Die vorliegende Erfindung offenbart ein Verfahren zur Ermittlung eines Fahrbahnzustandes mit den Merkmalen des Patentanspruchs 1, eine Vorrichtung zur Ermittlung eines Fahrbahnzustandes mit den Merkmalen des Patentanspruchs 7, sowie ein Kraftfahrzeug mit den Merkmalen des Patentanspruchs 11.

### Demgemäß ist vorgesehen:

Ein Verfahren zur Ermittlung eines Fahrbahnzustandes. Das Verfahren umfasst den Schritt des Bereitstellens von Bilddaten. Dabei erfasst die Bilderfassungseinrichtung mindestens einen Teil eines Raums um ein Rad eines Fahrzeugs. Weiterhin umfasst das Verfahren den Schritt des Detektierens von Spritzwasser in den bereitgestellten Bilddaten. Ferner umfasst das Verfahren einen Schritt zum Klassifizieren eines Fahrbahnzustandes unter Verwendung des in den bereitgestellten Bilddaten detektierten Spritzwassers. Das Klassifizieren des Fahrbahnzustandes umfasst mindestens eine Unterscheidung zwischen einer trockenen Fahrbahn, einer nassen Fahrbahn und einer Fahrbahn mit Aquaplaninggefahr.

### Weiterhin ist vorgesehen:

Eine Vorrichtung zur Ermittlung eines Fahrbahnzustands. Die Vorrichtung umfasst eine Bilderfassungseinrichtung und eine Auswerteeinrichtung. Die Bilderfassungseinrichtung dazu ausgelegt, Bilddaten mindestens eines Teils eines Raums um ein Rad zu erfassen und die erfassten Bilddaten bereitzustellen. Die Auswerteeinrichtung ist dazu ausgelegt, Spritzwasser in den bereitgestellten Bilddaten zu detektieren und einen Fahrbahnzustand unter Verwendung des in den Bilddaten detektierten Spritzwassers zu klassifizieren. Dabei umfasst das Klassifizieren des Fahrbahnzustands durch die Auswerteeinrichtung mindestens eine Unterscheidung zwischen einer trockenen Fahrbahn, einer nassen Fahrbahn und einer Fahrbahn mit Aquaplaninggefahr.

### Ferner ist vorgesehen:

Ein Kraftfahrzeug mit einer erfindungsgemäßen Vorrichtung zur Ermittlung eines Fahrbahnzustands.

### Vorteile der Erfindung

Der vorliegenden Erfindung liegt die Erkenntnis zugrunde, dass Aquaplaning in der Regel für den Fahrer eines Fahrzeugs und auch für Assistenzsysteme eines ganz- oder teilweise automatisiert fahrenden Fahrzeugs überraschend eintritt. Beim Eintritt von Aquaplaning schiebt sich hierbei ein Wasserkeil unter die Reifenaufstandfläche und führt damit zum Verlust der Haftung. Solange noch kein Aquaplaning auftritt, kann bei einer nassen Fahrbahn mit einer geringen Wassertiefe das Wasser von dem Reifen über Kanäle des Reifenprofils aufgenommen werden. Das Wasser haftet aufgrund seiner Oberflächenspannung an dem Reifen und wird anschließend durch die Fliehkräfte in das Radhaus geschleudert. Bei sich anbahnendem und auftretendem Aquaplaning muss der Reifen zunehmend mehr Wasser verdrängen. Hierbei erhöht sich zunächst die Wassermenge, die von dem Reifen in das Radhaus geschleudert wird. Darüber hinaus wird durch den erhöhten Staudruck auch vermehrt Wasser zur Seite und nach vorne verdrängt.

Der vorliegenden Erfindung liegt daher die Idee zugrunde, dieser Erkenntnis Rechnung zu tragen und ein sich anbahnendes Aquaplaning durch Auswertung des Spritzwassers an mindestens einem Rad des Fahrzeugs und dem umgebenden Raum zu erkennen. Hierbei kann mindestens zwischen drei unterschiedlichen Zuständen unterschieden werden. Bei einer trockenen Fahrbahn ist in der Regel kein Spritzwasser vorhanden, so dass aus der Abwesenheit von Spritzwasser auf eine trockene Fahrbahn geschlossen werden kann. Tritt dagegen Spritzwasser auf, so ist dies ein Indiz dafür, dass es sich mindestens um eine nasse Fahrbahn handelt, also um eine Fahrbahn, auf der sich Wasser befindet. Solange der Reifen des Fahrzeugs noch in direktem Kontakt mit der Fahrbahn steht, wird es sich bei dem Spritzwasser zumindest größtenteils um Spritzwasser handeln, welches aufgrund der Radialbewegung des Rades in das Radhaus geschleudert wird. Mit zunehmender Aquaplaningwahrscheinlichkeit wird darüber hinaus auch vermehrt Spritzwasser zur Seite oder gegebenenfalls sogar nach vorne auftreten. Somit kann aus der Analyse des Spritzwassers an einem Rad eines Fahrzeugs auf eine Aquaplaninggefahr oder auf das Vorhandensein von Aquaplaning geschlossen werden.

Da sich zwischen dem Erscheinungsbild des Spritzwassers und der Aquaplaninggefahr ein direkter Zusammenhang ableiten lässt, kann aus dem detektierten Spritzwasser direkt auf eine mögliche Aquaplaninggefahr geschlossen werden. Eine spezielle, gegebenenfalls aufwändige oder fehlerträchtige Kalibrierung von Sensoren ist dabei nicht erforderlich. Daher kann durch die Detektion des Spritzwassers, insbesondere durch eine optische Erfassung des Spritzwassers an mindestens einem Rad und dem umgebenden Raum, eine sehr zuverlässige Detektion einer möglichen Aquaplaninggefahr erreicht werden. Insbesondere ist es auch nicht erforderlich, nach einem Reifenwechsel oder nach einer Veränderung eines oder mehrerer Parameter der Fahrzeugreifen eine Anpassung des Systems zur Detektion der Aquaplaninggefahr durchführen zu müssen.

Durch eine derart zuverlässige Detektion einer Aquaplaninggefahr kann ein Fahrer eines Fahrzeugs auf mögliche Gefahrensituationen frühzeitig hingewiesen werden. Darüber hinaus ist es auch möglich, die Information über die Aquaplaninggefahr in Fahrerassistenzsystemen, sowie Systemen für ein ganz- oder teilweise automatisiertes Fahren mit einzubeziehen, so dass die Fahrweise des Fahrzeugs an die entsprechenden Witterungsverhältnisse angepasst werden kann. Hierdurch kann ein signifikanter Sicherheitsgewinn erreicht werden.

Gemäß einer Ausführungsform umfasst das Klassifizieren des Fahrbahnzustands ferner ein Detektieren einer Gefahr von Mikroaquaplaning. Als Mikroaquaplaning wird hierbei ein Zustand bezeichnet, bei welchem sich das Fahrzeug, insbesondere mindestens ein Rad des Fahrzeugs unmittelbar vor dem Aquaplaning befindet. In diesem Zustand des Mikroaquaplanings geht die Kontaktzone, in welcher sich der Reifen des Fahrzeugs und die Fahrbahn in direktem Kontakt befinden, quasi gegen Null oder ist zumindest auf ein Minimum reduziert. Dabei ist das Fahrzeug in diesem Zustand zwar noch eingeschränkt brems- und/oder manövrierbar, jedoch steht das Aquaplaning unmittelbar bevor. Das macht sich beispielsweise beim Bremsen aus höheren Geschwindigkeiten derart bemerkbar, dass der Bremsweg deutlich verlängert ist. Diesem Zustand kommt daher eine besondere Bedeutung zu, da in diesem Zustand noch kontrolliert in das Fahrverhalten des Fahrzeugs eingegriffen werden kann. Erfindungsgemäß umfasst das Detektieren von Spritzwasser ein Ermitteln einer Wurfrichtung des Spritzwassers. Weitere Parameter zur Auswertung des Spritzwassers in den Bilddaten sind darüber hinaus ebenso möglich. Das Detektieren von Spritzwasser kann zusätzlich ein Ermitteln einer Austrittsposition des Spritzwassers in den Bilddaten, ein Ermitteln einer Wassermenge des Spritzwassers in den Bilddaten, ein Ermitteln einer Anzahl von Tropfen in den Bilddaten und/oder ein Ermitteln einer Wurfweite des Spritzwassers umfassen. Durch das Ermitteln und Auswerten von derartigen charakteristischen Eigenschaften des Spritzwassers kann die Wahrscheinlichkeit für den Eintritt von Aquaplaning und damit für die Kritikalität der Fahrsituation gut bestimmt werden.

Gemäß einer Ausführungsform umfasst das Detektieren von Spritzwasser ein Ermitteln eines Anteils von Bilddaten mit Spritzwasser. Hierzu kann beispielsweise die Anzahl von Bildpunkten in den Bilddaten ermittelt werden, welche Spritzwasser repräsentieren. Ebenso ist es beispielsweise möglich, ein Flächenverhältnis, ein Bildpunktverhältnis oder ein anderes Verhältnis zwischen Bilddaten mit Spritzwasser und Bilddaten ohne Spritzwasser zu ermitteln

Gemäß einer Ausführungsform umfasst das Detektieren von Spritzwasser ein Detektieren einer Veränderung des Anteils von Spritzwasser in den Bilddaten. So kann beispielsweise eine zeitliche Zunahme oder Abnahme von Bildpunkten, die in Verbindung mit Spritzwasser stehen oder von Wassertropfen in den Bilddaten ermittelt werden.

Gemäß einer Ausführungsform umfasst das Verfahren einen Schritt zum Übertragen des klassifizierten Fahrbahnzustandes an eine Anzeigeeinrichtung und/oder eine Steuereinrichtung des Fahrzeugs. Auf diese Weise kann der klassifizierte Fahrbahnzustand einem Fahrer des Fahrzeugs angezeigt werden, so dass dieser daraufhin sein Fahrverhalten anpassen kann. Ebenso ist es möglich, dass eine Steuereinrichtung die Klassifikation des Fahrbahnzustandes empfängt und auswertet und daraufhin ein Fahrerassistenzsystem oder ein System des ganz- oder teilweise automatisierten Fahrens entsprechend dem klassifizierten Fahrbahnzustand die Steuervorgänge anpasst. Ferner kann die Klassifizierung des Fahrbahnzustandes auch mittels einer Übertragungseinrichtung an weitere Fahrzeuge oder eine zentrale Datenverarbeitungseinrichtung übertragen werden.

Gemäß einer Ausführungsform der Vorrichtung zur Ermittlung des Fahrbahnzustandes umfasst die Vorrichtung eine Beleuchtungseinrichtung. Die Beleuchtungseinrichtung ist dazu ausgelegt, den von der Bilderfassungseinrichtung erfassten Bereich zumindest teilweise zu beleuchten. Die Beleuchtung kann hierbei mittels sichtbarem oder unsichtbarem Licht erfolgen. Insbesondere ist beispielsweise auch eine Beleuchtung mit infrarotem Licht oder Licht einer vorbestimmten Wellenlänge oder eines vorbestimmten Wellenlängenspektrums möglich. Auf diese Weise ist es möglich, auch bei Dunkelheit oder ungünstigen Lichtverhältnissen eine zuverlässige Detektion von Spritzwasser an dem Rad des Fahrzeugs durchzuführen.

Gemäß einer Ausführungsform umfasst die Vorrichtung zur Ermittlung des Fahrbahnzustandes eine Signalisierungseinrichtung. Die Signalisierungseinrichtung ist dazu ausgelegt, eine Signalisierung auszugeben, falls ein vorbestimmter Fahrbahnzustand klassifiziert worden ist. Bei dieser Signalisierung kann es sich beispielsweise um ein optisches, akustisches oder haptisches Signal handeln, welches dem Fahrer des Fahrzeugs ausgegeben wird. Darüber hinaus kann die Signalisierung auch ein elektronisches Signal umfassen, welches beispielsweise an eine weitere Einheit des Fahrzeugs übertragen wird. Auf diese Weise kann die Steuerung des Fahrzeugs automatisch an den klassifizierten Fahrbahnzustand angepasst werden. Ferner kann die Signalisierung auch ein Übertragen des klassifizierten Fahrbahnzustandes an eine externe Einrichtung, beispielsweise ein weiteres Fahrzeug oder eine zentrale Datenverarbeitungseinrichtung umfassen.

Gemäß einer Ausführungsform eines Kraftfahrzeugs mit einer Vorrichtung zur Ermittlung des Fahrbahnzustandes umfasst das Kraftfahrzeug eine Steuervorrichtung, die dazu ausgelegt ist, mindestens eine Funktion des Kraftfahrzeugs unter Verwendung des klassifizierten Fahrbahnzustandes anzupassen. Auf diese Weise kann in Abhängigkeit des klassifizierten Fahrbahnzustandes das Fahrverhalten des Fahrzeugs angepasst werden. Hierdurch kann die Sicherheit des Fahrens gesteigert werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines Kraftfahrzeugs mit einer Vorrichtung zur Ermittlung eines Fahrbahnzustandes gemäß einer Ausführungsform;
- Figur 2:: eine schematische Darstellung eines Dreizonenmodells für einen Fahrzeugreifen bei Nässe;
- Figur 3:: eine schematische Darstellung des Spritzwasserverlaufs, wie er bei der Ermittlung eines Fahrbahnzustandes gemäß einer Ausführungsform zugrunde liegt; und
- Figur 4:: eine schematische Darstellung eines Ablaufdiagramms, wie es einem Verfahren zur Ermittlung eines Fahrbahnzustandes gemäß einer Ausführungsform zugrunde liegt.

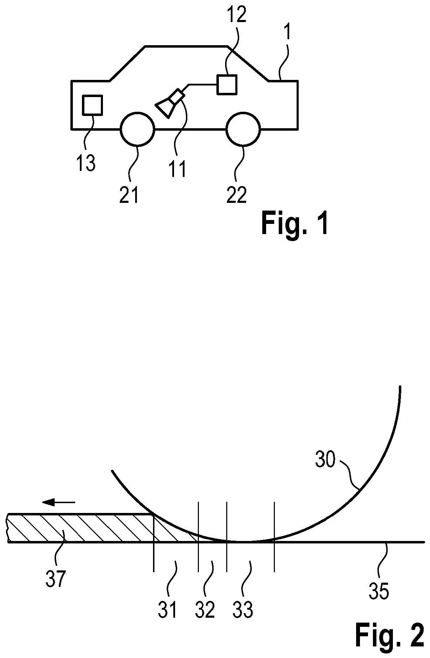

Figur 1 zeigt eine schematische Darstellung eines Fahrzeugs 1 mit einer Vorrichtung zur Ermittlung eines Fahrbahnzustandes. Die Vorrichtung zur Ermittlung des Fahrbahnzustandes umfasst mindestens eine Bilderfassungseinrichtung 11 sowie eine Auswerteeinrichtung 12. Bei der Bilderfassungseinrichtung 11 kann es sich beispielsweise um eine Kamera oder um ein Kamerasystem mit mehreren Kameras handeln. Bei den Kameras der Bilderfassungseinrichtung 11 kann es sich grundsätzlich um eine beliebige, geeignete Kamera, wie zum Beispiel eine Kamera zur Aufzeichnung von monochromatischen Bilddaten oder auch um eine Kamera zur Erfassung von farbigen Bilddaten handeln. Insbesondere kann es sich bei der Bilderfassungseinrichtung 11 auch um eine bereits in dem Fahrzeug 1 vorhandene Kamera eines Fahrerassistenzsystems oder eines beliebigen anderen Systems des Fahrzeugs 1 handeln. Die Bilderfassungseinrichtung 1 ist dabei auf ein Rad 21 des eines Fahrzeugs 1, eine Fahrzeugseite des Fahrzeugs 1 oder zumindest einen das Rad 21 umgebenden Bereich gerichtet. Mit anderen Worten, mindestens ein Rad 21 oder das Radhaus, welches dieses eine Rad 21 umgibt, oder eine Seite des Fahrzeugs 1 befindet sich im Sichtbereich (Englisch: field of view - FOV) der Bilderfassungseinrichtung 11.

Für die Ermittlung des Fahrbahnzustandes ist es dabei grundsätzlich ausreichend, mindestens ein Rad 21 des Fahrzeugs 1 mittels einer Bilderfassungseinrichtung zu erfassen. Darüber hinaus ist es jedoch auch möglich, mehrere Räder 21 des Fahrzeugs 1 mittels einer oder mehrerer Bilderfassungseinrichtungen 11 optisch zu erfassen. Beispielsweise kann ein Hinterrad 21 oder beide hintere Räder 21 eines Fahrzeugs 1 mittels Bilderfassungseinrichtungen 11 erfasst werden. Darüber hinaus ist es auch möglich, zusätzlich oder alternativ eines oder beide Vorderräder 22 des Fahrzeugs 1 ebenfalls mittels einer oder mehrerer Bilderfassungseinrichtungen 11 optisch zu erfassen. Vorzugsweise wird jedoch ein oder beide Vorderräder verwendet, da hierbei der Effekt von auftretendem Spritzwasser größer als an den Hinterrädern ist.

Die Bilderfassungseinrichtung 11 kann dabei Bilddaten eines Rads 21 des Fahrzeugs 1 im sichtbaren Lichtspektrum erfassen. Dabei können farbige oder monochromatische Bilddaten erfasst werden. Zusätzlich oder alternativ ist es auch möglich, Bilddaten im nicht sichtbaren infraroten und/oder ultravioletten Wellenlängenbereich zu erfassen.

Die Bilderfassungseinrichtung 11 kann dabei mindestens ein Rad 21 des Fahrzeugs 1 vollständig optisch erfassen. Darüber hinaus kann auch ein weiterer Bereich in der Umgebung um das Rad 21 des Fahrzeugs 1 optisch erfasst werden. Es ist jedoch auch möglich, nur einen Teilbereich des Rads 21 und ein geeigneter Umgebungsbereich um diesen Teilbereich herum mittels der Bilderfassungseinrichtung 11 optisch zu erfassen. Der von der Bilderfassungseinrichtung 11 zu erfassende Bildbereich sollte dabei neben mindestens einem Teil des Rads 21 oder eines Teils des Radhauses des Fahrzeugs 1 auch einen Umgebungsbereich umfassen, in welchem bei einem nassen Fahrbahnzustand Spritzwasser zu erwarten ist, welches bei einer Bewegung des Fahrzeugs 1 von dem Rad 21 verdrängt wird.

Die Bilderfassungseinrichtung 11 kann beispielsweise den Sichtbereich (FOV) mit einer vorgegebenen Bildwiederholrate periodisch erfassen und entsprechend Bilddaten bereitstellen. Grundsätzlich ist es jedoch auch möglich, die Bildwiederholrate für die Erfassung der Bilddaten in Abhängigkeit von weiteren Parametern, beispielsweise der Fahrzeuggeschwindigkeit oder ähnlichem anzupassen.

Um auch bei ungünstigen Lichtverhältnissen und bei Dunkelheit eine optische Erfassung mittels der Bilderfassungseinrichtung 11 zu ermöglichen, kann der Sichtbereich der Bilderfassungseinrichtung 11 oder gegebenenfalls auch nur ein Teilbereich davon mittels einer geeigneten Beleuchtungseinrichtung 13 beleuchtet werden. Das von der Beleuchtungseinrichtung 13 emittierte Licht kann insbesondere auf den von der Bilderfassungseinrichtung 11 erfassten Wellenlängenbereich angepasst sein. So kann beispielsweise bei einer Erfassung von infrarotem Licht durch die Bilderfassungseinrichtung 11 auch von der Beleuchtungseinrichtung 13 infrarotes Licht im entsprechenden Wellenlängenbereich emittiert werden. Durch die Verwendung von nicht sichtbarem Licht, wie zum Beispiel infrarotem Licht, kann eine Beeinträchtigung von weiteren Personen, insbesondere von Fahrzeugführern anderer Fahrzeuge oder anderen Personen in der Umgebung des Fahrzeugs 1 vermieden werden.

Die von der Bilderfassungseinrichtung 11 erfassten Bilddaten werden daraufhin an der Auswerteeinrichtung 12 bereitgestellt. Die Auswerteeinrichtung 12 verarbeitet die von der Bilderfassungseinrichtung 11 bereitgestellten Bilddaten und detektiert hierbei insbesondere Elemente in den bereitgestellten Bilddaten, welche Spritzwasser zuzuordnen sind. Bei dem zu detektierenden Spritzwasser in den Bilddaten handelt es sich dabei um Wasser, welches von dem Rad 21, das von der Bilderfassungseinrichtung 11 überwacht wird, verdrängt wird und/oder Wasser, welches zunächst an dem jeweiligen Rad 21 haftet und aufgrund der Radialbewegung des Rads 21 von dem Rad 21 weg geschleudert wird. Die Auswerteeinrichtung 12 kann hierbei eine oder mehrere charakteristische Eigenschaften des detektierten Spritzwassers in den Bilddaten ermitteln. Basierend auf charakteristischen Eigenschaften des Spritzwassers in den Bilddaten erfolgt daraufhin durch die Auswerteeinrichtung 12 eine Klassifizierung des Fahrbahnzustandes. Diese Klassifizierung des Fahrbahnzustandes umfasst dabei mindestens drei Klassen von Fahrbahnzuständen: eine trockene Fahrbahn, eine nasse Fahrbahn und eine Fahrbahn mit Aquaplaninggefahr.

Wird in den durch die Bilderfassungseinrichtung 11 erfassten Bilddaten kein oder zumindest nahezu kein Spritzwasser detektiert, so wird die Fahrbahn als trockene Fahrbahn klassifiziert. Wird dagegen in den durch die Bilderfassungseinrichtung 11 erfassten Bilddaten Spritzwasser detektiert, so handelt es sich mindestens um eine nasse Fahrbahn - gegebenenfalls kann darüber hinaus auch Aquaplaninggefahr bestehen. Daher wird beim Auftreten von Spritzwasser eine zusätzliche Analyse ausgeführt, um aus einem oder mehreren charakteristischen Eigenschaften des Spritzwassers eine mögliche Aquaplaninggefahr zu detektieren oder gegebenenfalls die Wahrscheinlichkeit für eine Aquaplaninggefahr abzuschätzen.

Bei einer nassen Fahrbahn wird zunächst ein Teil des Wassers am Rad 21 haften. Dieses Wasser wird aufgrund der Radialbewegung im weiteren Verlauf teilweise weg geschleudert. Bei diesem Spritzwasser, welches bereits bei einer nassen Fahrbahn ohne Aquaplaninggefahr auftritt, handelt es sich um Spritzwasser, welches von dem Rad 21 weg in das Radhaus des Fahrzeugs 1 geschleudert wird. Beim Auftreten von derartigem Spritzwasser kann also die Fahrbahn zumindest als nass klassifiziert werden.

Bei einer nassen Fahrbahn kann dabei zunächst das auf der Fahrbahn befindliche Wasser durch die Rillen im Profil eines Reifens des Rads 21 abfließen. Solange das Wasser noch ausreichend abfließen kann, können die vorstehenden Teile des Profils in einem solchen Reifen noch in Kontakt mit der Fahrbahn treten, so dass eine Haft- und Bremswirkung weiterhin gegeben ist. Mit zunehmender Wassermenge und/oder zunehmender Geschwindigkeit des Fahrzeugs 1 wird dabei vermehrt auch Wasser zur Seite und gegebenenfalls auch nach vorne verdrängt. Dabei steigt auch zunehmend die Gefahr von Aquaplaning. Daher kann ein Anstieg des Spritzwassers, insbesondere eine Detektion von seitlichem und/oder nach vorne gerichtetem Spritzwasser auch als ein Hinweis für eine zunehmende Gefahr von Aquaplaning gewertet werden. Überschreitet das detektierte Spritzwasser eine vorgegebene Schwelle, so wird daher der Fahrbahnzustand als "Aquaplaninggefahr" klassifiziert. Dabei kann sowohl die Gesamtmenge des Spritzwassers, die Spritzwassermenge des sich vom Rad ablösenden Wassers, das in das Radhaus geschleudert wird und/oder das seitlich oder nach vorne gerichtete Spritzwasser als Kriterium zur Detektion einer Aquaplaninggefahr ausgewertet werden.

Für die Betrachtung der Spritzwassermenge sind dabei mehrere unterschiedliche Parameter möglich. So können beispielsweise sämtliche Bildpunkte (Pixel) in einem Bild (Frame) der von der Bilderfassungseinrichtung 11 bereitgestellten Bilddaten ausgewertet werden und dabei zwischen Bildpunkten unterschieden werden, welche Spritzwasser zuzuordnen sind, und Bildpunkten, welche nicht Spritzwasser zuzuordnen sind. Entsprechend kann bei Überschreiten einer ersten Anzahl von Bildpunkten, welche Spritzwasser zuzuordnen sind, eine Fahrbahn mindestens als nass klassifiziert werden und bei Überschreiten einer weiteren Schwelle die Fahrbahn als Fahrbahn mit Aquaplaninggefahr klassifiziert werden. Darüber hinaus ist es auch möglich, in einem Bild alle Flächenanteile aufzusummieren, welche Spritzwasser zuzuordnen sind. Auch in diesem Fall kann beim Überschreiten einer ersten Schwelle die Fahrbahn als nass klassifiziert werden und beim Überschreiten einer zweiten Schwelle die Fahrbahn als Fahrbahn mit Aquaplaninggefahr klassifiziert werden. Weiterhin ist es auch möglich, die Veränderung der Anteile des Spritzwassers in den erfassten Bilddaten auszuwerten und bei einem raschen Anstieg des Spritzwasseranteils auf eine nasse Fahrbahn bzw. eine Fahrbahn mit Aquaplaninggefahr zu schließen. Dabei können die Schwellwerte zur Unterscheidung zwischen trockener Fahrbahn, nasser Fahrbahn und Fahrbahn mit Aquaplaninggefahr gegebenenfalls auch basierend auf weiteren Parametern, wie beispielsweise Fahrgeschwindigkeit oder Scheibenwischeraktivität des Fahrzeugs 1 oder Außentemperatur angepasst werden.

Weiterhin ist es auch möglich, einen Winkel des Spritzwassers in den durch die Bilderfassungseinrichtung 11 detektierten Bilddaten zu ermitteln und die Klassifizierung des Fahrbahnzustandes basierend auf einem oder gegebenenfalls auch mehreren Winkeln des Spritzwassers in den Bilddaten zu unterscheiden. Erfindungsgemäß ist eine Klassifizierung des Fahrbahnzustands basierend auf einer Wurfrichtung des Spritzwassers vorgesehen. Ferner ist auch eine Klassifizierung des Fahrbahnzustandes basierend auf einer Wurfweite des Spritzwassers Spritzwassers möglich. Weitere Parameter wie Tropfen- oder Strahlform des austretenden Wassers zur Unterscheidung der Fahrbahnzustände sind darüber hinaus ebenso möglich.

Gegebenenfalls kann die Klassifizierung des Fahrbahnzustandes neben den drei zuvor beschriebenen Fahrbahnzuständen auch noch einen oder mehrere weitere Fahrbahnzustände unterscheiden. So ist beispielsweise ein als "Mikroaquaplaning" bezeichneter weiterer Fahrbahnzustand möglich. Bei diesem als Mikroaquaplaning bezeichneten Fahrbahnzustand handelt es sich um einen Fahrbahnzustand, in dem zwar noch eine - gegebenenfalls auch nur geringe - Haftwirkung des Rads 21 an der Fahrbahn vorhanden ist, jedoch ein vollständiges Aquaplaning unmittelbar bevorsteht.

Figur 2 zeigt eine schematische Darstellung eines Drei-Zonen-Modells zur Beschreibung des Kontakts zwischen einem Reifen 30 und einer Fahrbahn 35. Das auf der Fahrbahn 35 befindliche Wasser 37 ist dabei schraffiert dargestellt. Dabei kann die Kontaktfläche des Reifens 30 mit der Fahrbahn 35 in drei Bereiche 31-33 unterteilt werden. Bewegt sich das Fahrzeug und somit auch der Reifen 30 in die durch die Pfeilrichtung gekennzeichnete Fahrtrichtung, so bildet sich an dem Reifen zunächst eine Annäherungszone 31, in welcher sich etwa keilförmig Wasser zwischen dem Reifen 30 und der Fahrbahn 35 befindet. An diese Annäherungszone 31 schließt sich eine Übergangszone 32 an. Im Bereich der Kontaktzone 33, welche sich der Übergangszone 32 anschließt, steht der Reifen 30 in direktem Kontakt mit der Fahrbahn 35, wodurch eine entsprechende Haftwirkung erreicht werden kann. Mit zunehmendem Wasserstand und/oder zunehmender Fahrgeschwindigkeit verringert sich die Kontaktzone 33 und damit die Kontaktfläche zwischen Reifen 30 und Fahrbahn 35. Geht diese Ausdehnung der Kontaktzone 33 gegen Null, so steht die Gefahr von Aquaplanings unmittelbar bevor. Dieser Zustand wird daher als Mikroaquaplaning bezeichnet. Existiert keine Kontaktzone 33 mehr, das heißt es befindet sich zwischen dem Reifen 30 und der Fahrbahn 35 im gesamten Bereich Wasser, so tritt Aquaplaning auf, und ein Fahrzeug kann während dieses Zustandes nicht mehr kontrolliert gesteuert oder abgebremst werden.

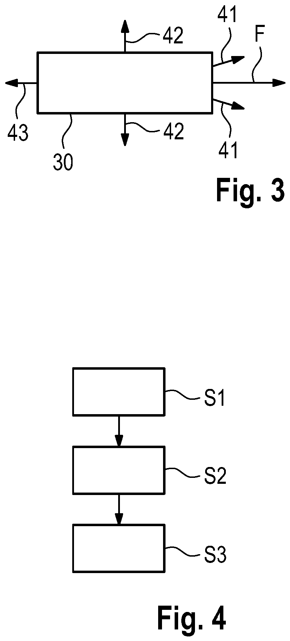

Figur 3 zeigt eine schematische Darstellung der einzelnen Spritzwasserrichtungen eines Reifens 30 mit Fahrtrichtung F. Während bei einer trockenen Fahrbahn naheliegender Weise kein Spritzwasser auftritt, so wird bei einer nassen Fahrbahn sich, wie zuvor bereits beschrieben, aufgrund des Anhaftens von Wasser an der Oberfläche des Reifens 30 zunächst Spritzwasser bilden, welches aufgrund der Radialbewegung des Reifens 30 von dem Reifen 30 weg geschleudert wird. Dieses Spritzwasser wird vornehmend nach hinten hoch in das Radhaus des Fahrzeugs geschleudert und tritt seitlich am hinteren Teil des Radhauses in Tropfen- oder Strahlform aus. Dieser Anteil des Spritzwassers ist in Figur 3 mit dem Bezugszeichen 43 gekennzeichnet. Mit zunehmendem Wasserstand und/oder zunehmender Fahrgeschwindigkeit wird auch vermehrt Spritzwasser zur Seite in die Richtungen 42 verdrängt. Darüber hinaus kann sich in Fahrtrichtung F vor dem Reifen 30 auch eine Art Bugwelle ausbilden, welche gegebenenfalls auch Spritzwasser nach vorne in die Richtungen 41 hervorruft. In beiden Fällen wird dieses Spritzwasser durch einen erhöhten Wasserdruck bei Aquaplaninggefahr hervorgerufen. Der Hauptaustrittsort des Wassers ist jeweils unten im Bereich des Kontakts zwischen Reifen und Fahrbahn, also am sogenannten Latsch des Reifens. Das geht einher mit durch die Fliehkraft in die Radhäuser geschleudertes Wasser, welches seitlich aus den Radhäusern austritt und einer deutlichen Gischtentwicklung im gesamten radnahen Bereich.

Entsprechend kann beim Auftreten von Spritzwasser nur in Richtung 43 auf eine lediglich nasse Fahrbahn geschlossen werden, während bei zunehmendem Auftreten von Spritzwasser in die Richtungen 42 und 41 auch die Wahrscheinlichkeit von Mikroaquaplaning bzw. Aquaplaning steigt. Daher kann aus der Menge und/oder der Richtung des Spritzwassers auf den Fahrbahnzustand und insbesondere auf die Wahrscheinlichkeit eines sich anberaumenden Aquaplanings geschlossen werden.

Die Klassifizierung des Fahrbahnzustandes, insbesondere ein Hinweis auf eine nasse Fahrbahn sowie die Detektion von einer Aquaplaninggefahr kann daraufhin einem Fahrer des Fahrzeugs ausgegeben werden. Beispielsweise kann mit steigender Aquaplaninggefahr dem Fahrer des Fahrzeugs ein optisches und/oder akustisches und/oder haptisches Signal ausgegeben werden. Daraufhin kann der Fahrer des Fahrzeugs die Fahrweise entsprechend anpassen, beispielsweise die Geschwindigkeit absenken, und so einem unkontrolliertem Fahrverhalten durch Aquaplaning vorbeugen.

Darüber hinaus ist es auch möglich, die Klassifizierung des Fahrbahnzustandes, insbesondere die Detektion einer nassen Fahrbahn sowie eine Detektion einer Aquaplaninggefahr bzw. gegebenenfalls von Mikroaquaplaning oder die Wahrscheinlichkeit für Aquaplaning auch einem weiteren Steuersystem des Fahrzeugs 1 bereitzustellen. Beispielsweise kann ein Fahrerassistenzsystem basierend auf der Klassifizierung des Fahrbahnzustandes automatisch in das Fahrverhalten des Fahrzeugs eingreifen, um einem unkontrollierten Fahrverhalten aufgrund von Aquaplaning vorzubeugen oder gegebenenfalls auch bereits auf Auftreten von Aquaplaning in die Steuerung des Fahrzeugs einzugreifen, um gefährliche Lenk- und/oder Bremsmanöver während des Aquaplanings zu vermeiden. Ferner kann auch ein ganz oder teilweise automatisiertes Fahrsystem das Fahrverhalten entsprechend der Klassifizierung des Fahrbahnzustandes anpassen.

Ferner ist es auch möglich, einen detektierten Fahrbahnzustand, insbesondere die Detektion einer Aquaplaninggefahr bzw. die Wahrscheinlichkeit von Aquaplaning mittels einer Kommunikationseinrichtung, beispielsweise einer Funkschnittstelle oder ähnlichem an weitere Fahrzeuge oder ein zentrales Rechensystem zu übertragen. Auf diese Weise können auch weitere Verkehrsteilnehmer von der Klassifizierung des Fahrbahnzustandes Gebrauch machen.

Figur 4 zeigt eine schematische Darstellung eines Verfahrens zur Ermittlung eines Fahrbahnzustandes gemäß einer Ausführungsform. In einem ersten Schritt S1 werden zunächst durch eine Bilderfassungseinrichtung 11 Bilddaten erfasst und bereitgestellt. Die Bilderfassungseinrichtung 11 ist hierbei, wie bereits zuvor beschrieben, auf mindestens ein Rad 21 des Fahrzeugs, einen Bereich, der das Rad 21 umgibt und/oder zumindest auf eine Fahrzeugseite des Fahrzeugs 1 gerichtet. In Schritt S2 wird in den erfassten Bilddaten Spritzwasser detektiert. Unter Verwendung des detektierten Spritzwassers in den bereitgestellten Bilddaten wird in Schritt S3 der Fahrbahnzustand klassifiziert. Die Klassifizierung umfasst dabei mindestens eine Unterscheidung in drei Fahrbahnzustände: trockene Fahrbahn, nasse Fahrbahn, und Aquaplaning-Fahrbahn. Darüber hinaus sind auch noch eine oder mehrere weitere Fahrbahnzustände möglich. Insbesondere kann die Klassifizierung beispielsweise auch einen weiteren Fahrbahnzustand eines sich anberaumenden Aquaplanings, welcher hier als Mikroaquaplaning bezeichnet wird, umfassen.

Zusammenfassend betrifft die vorliegende Erfindung eine Klassifizierung eines Fahrbahnzustandes basierend auf dem an einem Rad des Fahrzeugs auftretenden Spritzwassers. Hierzu wird mittels einer Kamera der Raum um ein Rad des Fahrzeugs erfasst und das durch die Kamera erfasste Bild wird analysiert, um darin Spritzwasser zu detektieren. Auf Grundlage des detektierten Spritzwassers kann eine Unterscheidung zwischen einer trockenen Fahrbahn, einer nassen Fahrbahn oder einer Fahrbahn mit Aquaplaninggefahr getroffen werden.

## Patentansprüche

1. Verfahren zur Ermittlung eines Fahrbahnzustandes, mit den Schritten:
Bereitstellen (S1) von Bilddaten durch eine Bilderfassungseinrichtung (11), wobei die Bilderfassungseinrichtung (11) mindestens einen Teil eines Raums um ein Rad eines Fahrzeugs (1) erfasst;
Detektieren (S2) von Spritzwasser in den bereitgestellten Bilddaten; und
Klassifizieren (S3) eines Fahrbahnzustandes unter Verwendung des in den bereitgestellten Bilddaten detektierten Spritzwassers;
wobei das Klassifizieren (S3) des Fahrbahnzustandes eine Unterscheidung zwischen einer trockenen Fahrbahn und einer nassen Fahrbahn umfasst,
**dadurch gekennzeichnet,**
**dass** das Detektieren (S2) von Spritzwasser ein Ermitteln einer Wurfrichtung des Spritzwassers umfasst,
wobei das Klassifizieren (S3) des Fahrbahnzustandes zusätzlich mindestens eine Unterscheidung zwischen einer nassen Fahrbahn ohne Aquaplaninggefahr und einer nassen Fahrbahn mit Aquaplaninggefahr umfasst, wobei das Klassifizieren (S3) basierend auf der ermittelten Wurfrichtung erfolgt.

2. Verfahren nach Anspruch 1, wobei das Klassifizieren (S3) des Fahrbahnzustandes ferner ein Detektieren einer Gefahr von Mikroaquaplaning umfasst, wobei eine Haftwirkung des Rads an der Fahrbahn noch vorhanden ist, jedoch ein vollständiges Aquaplaning unmittelbar bevorsteht.

3. Verfahren nach Anspruch 1 oder 2, wobei das Detektieren (S2) von Spritzwasser ferner ein Ermitteln einer Austrittsposition des Spritzwassers in den Bilddaten, eines Austrittswinkels des Spritzwassers in den Bilddaten, einer Wassermenge des Spritzwassers in den Bilddaten, einer Anzahl von Tropfen in den Bilddaten und/oder eine Unterscheidung von einer Tropfen- oder Strahlform des Spritzwassers umfasst.

4. Verfahren nach einem der Ansprüche 1 bis 3, wobei das Detektieren (S2) von Spritzwasser ferner ein Ermitteln eines Anteils von Bilddaten mit Spritzwasser umfasst.

5. Verfahren nach einem der Ansprüche 1 bis 4, wobei das Detektieren (S2) von Spritzwasser ferner ein Detektieren einer Veränderung des Anteils von Spritzwasser in den Bilddaten umfasst.

6. Verfahren nach einem der Ansprüche 1 bis 5, mit einem Schritt zum Übertragen des klassifizierten Fahrbahnzustandes an eine Anzeigeeinrichtung und/oder eine Steuereinrichtung eines Fahrzeugs (1).

7. Vorrichtung zur Ermittlung eines Fahrbahnzustandes, mit:
einer Bilderfassungseinrichtung (11), die dazu ausgelegt ist, Bilddaten mindestens eines Teils eines Raums um ein Rad (21) eines Fahrzeugs (1) zu erfassen und bereitzustellen; und
einer Auswerteeinrichtung (12), die dazu ausgelegt ist, Spritzwasser in den bereitgestellten Bilddaten zu detektieren und einen Fahrbahnzustand unter Verwendung des in den Bilddaten detektierten Spritzwassers zu klassifizieren,
wobei das Klassifizieren (S3) des Fahrbahnzustandes eine Unterscheidung zwischen einer trockenen Fahrbahn und einer nassen Fahrbahn umfasst,
**dadurch gekennzeichnet,**
**dass** das Detektieren (S2) von Spritzwasser ein Ermitteln einer Wurfrichtung des Spritzwassers umfasst,
wobei das Klassifizieren (S3) des Fahrbahnzustandes zusätzlich mindestens eine Unterscheidung zwischen einer nassen Fahrbahn ohne Aquaplaninggefahr und einer nassen Fahrbahn mit Aquaplaninggefahr umfasst, wobei das Klassifizieren (S3) basierend auf der ermittelten Wurfrichtung erfolgt.

8. Vorrichtung nach Anspruch 7, mit einer Beleuchtungseinrichtung (13), die dazu ausgelegt ist, den von der Bilderfassungseinrichtung erfassten Raum zumindest teilweise zu beleuchten.

9. Vorrichtung nach Anspruch 7 oder 8, einer Signalisierungseinrichtung, die dazu ausgelegt ist, eine Signalisierung auszugeben, falls ein vorbestimmter Fahrbahnzustand klassifiziert worden ist.

10. Vorrichtung nach einem der Ansprüche 7 bis 9, mit einer Übertragungseinrichtung, die dazu ausgelegt ist, den klassifizierten Fahrbahnzustand an eine weitere Vorrichtung zu übertragen.

11. Kraftfahrzeug (1) mit einer Vorrichtung zur Ermittlung eines Fahrbahnzustands nach einem der Ansprüche 7 bis 10.

12. Kraftfahrzeug (1) nach Anspruch 11, mit einer Steuervorrichtung, die dazu ausgelegt ist, mindestens eine Funktion des Kraftfahrzeugs (1) unter Verwendung des klassifizierten Fahrbahnzustandes anzupassen.

## Claims

1. Method for determining a roadway condition, comprising the following steps:
providing (S1) image data by means of an image capturing device (11), wherein the image capturing device (11) captures at least part of a space around a wheel of a vehicle (1);
detecting (S2) spray water in the image data provided;
and
classifying (S3) a roadway condition using the spray water detected in the image data provided;
wherein the classifying (S3) of the roadway condition comprises a distinction between a dry roadway and a wet roadway,
**characterized**
**in that** the detecting (S2) of spray water comprises determining a projection direction of the spray water,
wherein the classifying (S3) of the roadway condition additionally comprises at least one distinction between a wet roadway without risk of aquaplaning and a wet roadway with risk of aquaplaning, wherein the classifying (S3) is carried out on the basis of the projection direction determined.

2. Method according to Claim 1, wherein the classifying (S3) of the roadway condition furthermore comprises detecting a risk of microaquaplaning, wherein an adhesion effect of the wheel on the roadway is still present, but complete aquaplaning is immediately imminent.

3. Method according to Claim 1 or 2, wherein the detecting (S2) of spray water furthermore comprises determining an emergence position of the spray water in the image data, an emergence angle of the spray water in the image data, a water amount of the spray water in the image data, a number of drops in the image data and/or a distinction of a drop or jet form of the spray water.

4. Method according to any of Claims 1 to 3, wherein the detecting (S2) of spray water furthermore comprises determining a proportion of image data with spray water.

5. Method according to any of Claims 1 to 4, wherein the detecting (S2) of spray water furthermore comprises detecting a change in the proportion of spray water in the image data.

6. Method according to any of Claims 1 to 5, comprising a step for transmitting the classified roadway state to a display device and/or a control device of a vehicle (1).

7. Apparatus for determining a roadway condition, comprising:
an image capturing device (11) designed to capture and provide image data of at least part of a space around a wheel (21) of a vehicle (1); and
an evaluation device (12) designed to detect spray water in the image data provided and to classify a roadway condition using the spray water detected in the image data,
wherein the classifying (S3) of the roadway condition comprises a distinction between a dry roadway and a wet roadway,
**characterized**
**in that** the detecting (S2) of spray water comprises determining a projection direction of the spray water,
wherein the classifying (S3) of the roadway condition additionally comprises at least one distinction between a wet roadway without risk of aquaplaning and a wet roadway with risk of aquaplaning, wherein the classifying (S3) is carried out on the basis of the projection direction determined.

8. Apparatus according to Claim 7, comprising an illumination device (13) designed to at least partially illuminate the space captured by the image capturing device.

9. Apparatus according to Claim 7 or 8, comprising a signalling device designed to output a signalling if a predetermined roadway condition has been classified.

10. Apparatus according to any of Claims 7 to 9, comprising a transmission device designed to transmit the classified roadway condition to a further apparatus.

11. Motor vehicle (1) comprising an apparatus for determining a roadway condition according to any of Claims 7 to 10.

12. Motor vehicle (1) according to Claim 11, comprising a control apparatus designed to adapt at least one function of the motor vehicle (1) using the classified roadway condition.

## Revendications

1. Procédé pour déterminer l'état d'une chaussée, comprenant les étapes suivantes :
fourniture (S1) de données d'image par un dispositif (11) de capture d'images, le dispositif (11) de capture d'images capturant au moins une partie d'un espace situé autour d'une roue d'un véhicule (1) ;
détection (S2) de projections d'eau dans les données d'image fournies ;
et
classification (S3) d'un état de la chaussée en utilisant les projections d'eau détectées dans les données d'image fournies ;
la classification (S3) de l'état de la chaussée comprenant une distinction entre une chaussée sèche et une chaussée mouillée,
**caractérisé**
**en ce que** la détection (S2) des projections d'eau comprend la détermination d'une direction de projection des projections d'eau,
la classification (S3) de l'état de la chaussée comprenant en outre au moins une distinction entre une chaussée mouillée sans risque d'aquaplaning et une chaussée mouillée avec risque d'aquaplaning, la classification (S3) étant basée sur la direction de projection déterminée.

2. Procédé selon la revendication 1, dans lequel la classification (S3) de l'état de la chaussée comprend en outre la détection d'un risque de micro-aquaplanage, dans lequel un effet d'adhérence de la roue à la chaussée est encore présent, mais un aquaplanage complet est imminent.

3. Procédé selon la revendication 1 ou la revendication 2, dans lequel la détection (S2) de projections d'eau comprend en outre la détermination d'une position de sortie des projections d'eau dans les données d'image, d'un angle de sortie des projections d'eau dans les données d'image, d'une quantité d'eau des projections d'eau dans les données d'image, d'un nombre de gouttes dans les données d'image et/ou d'une distinction entre une forme de goutte ou de jet des projections d'eau.

4. Procédé selon l'une des revendications 1 à 3, dans lequel la détection (S2) de projections d'eau comprend en outre la détermination d'une proportion de données d'image avec des projections d'eau.

5. Procédé selon l'une des revendications 1 à 4, dans lequel la détection (S2) de projections d'eau comprend en outre la détection d'une modification de la proportion de projections d'eau dans les données d'image.

6. Procédé selon l'une des revendications 1 à 5, comprenant une étape de transmission de l'état classifié de la chaussée à un dispositif d'affichage et/ou à un dispositif de commande d'un véhicule (1).

7. Dispositif pour déterminer l'état d'une chaussée, comprenant :
un dispositif (11) de capture d'images qui est conçu pour capturer et fournir des données d'images d'au moins une partie d'un espace autour d'une roue (21) d'un véhicule (1) ; et
un dispositif d'évaluation (12) qui est conçu pour détecter les projections d'eau dans les données d'image fournies et pour classifier l'état de la chaussée en utilisant les projections d'eau détectées dans les données d'image,
la classification (S3) de l'état de la chaussée comprenant une distinction entre une chaussée sèche et une chaussée mouillée,
**caractérisé**
**en ce que** la détection (S2) des projections d'eau comprend la détermination d'une direction des projections d'eau,
la classification (S3) de l'état de la chaussée comprenant en outre au moins une distinction entre une chaussée mouillée sans risque d'aquaplaning et une chaussée mouillée avec risque d'aquaplaning, la classification (S3) étant basée sur la direction de projection déterminée.

8. Dispositif selon la revendication 7, comprenant un dispositif d'éclairage (13) qui est conçu pour éclairer au moins partiellement l'espace capturé par le dispositif de capture d'images.

9. Dispositif selon la revendication 7 ou la revendication 8, comprenant un dispositif de signalisation qui est conçu pour émettre un signal si un état prédéfini de la chaussée a été classifié.

10. Dispositif selon l'une des revendications 7 à 9, comprenant un dispositif de transmission qui est conçu pour transmettre l'état de chaussée classifié à un autre dispositif.

11. Véhicule automobile (1) équipé d'un dispositif pour déterminer un état de chaussée selon l'une des revendications 7 à 10.

12. Véhicule automobile (1) selon la revendication 11, comprenant un dispositif de commande qui est conçu pour adapter au moins une fonction du véhicule automobile (1) en utilisant l'état de la chaussée classifié.
